# EUROPÄISCHE PATENTANMELDUNG

(11) **EP 2 876 311 A1**
(43) Veröffentlichungstag der Anmeldung: **27.05.2015**
(21) Anmeldenummer: 13194193.2
(22) Anmeldetag: 25.11.2013
(51) Int. Cl.: F16B 13/06

(54) **Spreizanker mit Quellelement zur Hülsenfixierung**

(71) Anmelder: HILTI Aktiengesellschaft, 9494 Schaan (LI)
(72) Erfinder: Gstach, Peter, 9494 Schaan (LI); Winkler, Bernhard, 6800 Feldkirch (AT); Mihala, Ronald, 6800 Feldkirch (AT)
(74) Vertreter: Hilti Aktiengesellschaft Corporate Intellectual Property

(57) **Zusammenfassung**

Die Erfindung betrifft einen Spreizanker mit einem Bolzen und zumindest einem am Bolzen angeordneten Expansionselement, wobei der Bolzen eine Schrägfläche aufweist, welche das Expansionselement am Bolzen radial nach aussen drängt, wenn der Bolzen in einer Auszugsrichtung relativ zum Expansionselement versetzt wird. Erfindungsgemäss ist vorgesehen, dass der Spreizanker zumindest ein Quellelement aus einer quellfähigen Masse aufweist, welches aufquellen kann, um das Expansionselement in Auszugsrichtung an einer Bohrlochwand festzulegen.

## Beschreibung

Die Erfindung betrifft einen Spreizanker, insbesondere zum Festlegen in einem Bohrloch in einem Betonsubstrat, gemäss dem Oberbegriff des Anspruchs 1. Ein solcher Spreizanker ist ausgestattet mit einem Bolzen und zumindest einem am Bolzen angeordneten Expansions-element, wobei der Bolzen eine Schrägfläche aufweist, welche das Expansionselement am Bolzen radial nach aussen drängt, wenn der Bolzen in einer Auszugsrichtung relativ zum Expansionselement versetzt wird.

Ein gattungsgemässer Spreizanker ist beispielsweise aus der EP 0 514 342 A1 bekannt. Er wird dazu verwendet, um Bauteile an einem Bohrloch in einem festen Substrat, beispielsweise in Beton, zu verankern. Der bekannte Spreizanker weist einen länglichen Bolzen auf, der an seinem vorderen Ende einen konusförmigen, sich entgegen der Auszugsrichtung aufweitenden Spreizabschnitt aufweist. Versetzt zum Spreizabschnitt ist eine entgegen der Auszugsrichtung verschiebbar gelagerte Spreizhülse vorgesehen ist. Die Spreizhülse hat aussenseitig Erhebungen, die in radialer Richtung herausragen, und mit denen sich die Spreizhülse an der Innenwand des Bohrlochs im Substrat verhaken kann. Der Spreizanker wird mit dem Spreizabschnitt voran entgegen der Auszugsrichtung in das Bohrloch eingeschlagen und anschliessend wird der Bolzen in Auszugsrichtung wieder ein Stück weit aus dem Bohrloch herausgezogen. Nach dem Einschlagen des Spreizankers verhakt sich die Spreizhülse an der Innenwand des Bohrlochs und wird daher beim Herausziehen des Bolzens im Bohrloch zurückgehalten. Hierdurch wird der Spreizabschnitt des Bolzens in die Spreizhülse gezogen, wobei die Spreizhülse aufgrund des zunehmenden Durchmessers des Spreizabschnitts aufgespreizt wird und sich der Spreizanker mit der Spreizhülse im Substrat verklemmt, so dass Lasten in das Substrat übertragen werden können. Dieses Grundprinzip kann vorzugsweise auch bei der Erfindung verwirklicht werden.

Um ein zuverlässiges Aufspreizen des Spreizankers zu gewährleisten, sollten Verschiebungen der Spreizhülse beim anfänglichen Ausziehen des Bolzens vermieden werden. Zu diesem Zweck sind gemäss EP 0 514 342 A1 Erhebung auf der Spreizhülse vorgesehen, welche die Hülse nach dem Einschlagen im Bohrloch fixieren. Je grösser jedoch diese Erhebungen sind, desto schwieriger kann der Einschlagprozess des Ankers in das Bohrloch sein. Die erzielbare Haltekraft mit Erhebungen kann daher oft im Widerspruch zum Einschlagverhalten des Ankers stehen.

Die EP 0 167 481 A1 beschreibt einen unter axialer Vorspannung in einem Substrat verankerbaren Spreizanker, mit dem ein Widerlager gegen das Substrat gespannt wird, wobei zwischen dem Widerlager und dem Substrat ein entlang der Ankerlängsachse ausdehnbarer dosenartiger Behälter mit einem Aufnahmeraum für eine quellfähige Masse angeordnet ist. Beim Aufquellen kann diese Masse die Vorspannung des Ankers aufrechterhalten.

Aufgabe der Erfindung ist es, einen besonders zuverlässigen Spreizanker anzugeben, mit dem bei besonders geringem Aufwand besonders gute Lastwerte erzielt werden können.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass er zumindest ein Quellelement aus einer quellfähigen Masse aufweist, welches aufquellen kann, um das Expansionselement in Auszugsrichtung an der, insbesondere zylindrischen, Wand eines Bohrlochs festzulegen.

Ein Grundgedanke der Erfindung kann darin gesehen werden, am Anker ein Quellelement aus einer quellfähigen Masse anzuordnen, das im Inneren des Bohrlochs zum Quellen gebracht wird. Bei diesem Aufquellprozess presst sich das Quellelement gegen die zylindrische Bohrlochwand, wodurch die Reibung zwischen dem Quellelement und der Bohrlochwand erhöht wird, und damit auch die Reibung zwischen dem Expansionselement, welches mit dem Quellelement in Wirkverbindung steht, und der Bohrlochwand erhöht wird. Hierdurch wird das Expansionselement im Bohrloch axial gegen ein Herausziehen in Auszugsrichtung gesichert. Infolgedessen können erfindungsgemäss besonders hohe Haltekräfte zwischen Expansionselement und Bohrlochwand, auch in gerissenem Beton, und damit ein besonders zuverlässiger Spreizvorgang realisiert werden. Da erfindungsgemäss hohe Haltekräfte zwischen Expansionselement und Bohrlochwand erzielt werden können, kann ein erfindungsgemässer Anker darüber hinaus mit einem hohen Reibungskoeffizienten zwischen Expansionselement und Bolzen ausgelegt werden, ohne dass die Gefahr besteht, dass sich das Expansionselement beim Setzen axial verschiebt. Dieser hohe Reibungskoeffizient zwischen Expansionselement und Bolzen kann wiederum besonders hohe Auszugslasten am gesetzten Anker gewährleisten, insbesondere auch in gerissenem Beton.

Ein wesentlicher Vorteil der Erfindung liegt dabei darin, dass die quellfähige Masse erst nach dem Einschlagen des Ankers in das Bohrloch aktiviert werden kann, so dass die hohen Haltekräfte zwischen Expansionselement und Bohrlochwand erst im Anschluss an das Einschlagen auftreten. Somit ist der Anker trotz der hohen Haltekräfte zwischen Expansionselement und Bohrlochwand leicht einschlagbar. Erfindungsgemäss wird somit der bei Ankern des Standes der Technik bestehende Widerspruch, gemäss dem hohe Haltekräfte des Expansionselements auch hohe Erhebungen an der Hülse und damit hohe Einschlagkräfte benötigen, aufgelöst.

Das Expansionselement und/oder der Bolzen bestehen bevorzugt aus einem Metallmaterial, welches zur gezielten Beeinflussung der Reibung auch beschichtet sein kann. Das Expansionselement ist erfindungsgemäss längs des Bolzens verschiebbar am Bolzen befestigt. Soweit hier von "radial" und "axial" die Rede ist, soll sich dies insbesondere auf die Längsachse des Bolzens und/oder Spreizankers beziehen, die insbesondere die Symmetrie- und/oder Mittelachse des Bolzens beziehungsweise des Spreizankers sein kann. Der Spreizanker kann insbesondere ein kraftkontrolliert spreizender Spreizanker sein.

Erfindungsgemäss wird das Expansionselement von der Schrägfläche des Bolzens radial nach aussen gedrängt und dabei gegen die Bohrlochwand im Substrat gepresst, wenn der Bolzen in Auszugsrichtung des Bolzens relativ zum Expansionselement axial versetzt wird. Hierdurch wird der Spreizanker im Bohrloch verankert. Vorzugsweise verläuft die Auszugsrichtung parallel zur Längsachse des Bolzens und/oder zeigt aus dem Bohrloch heraus. An der Schrägfläche nimmt der Abstand der Bolzenoberfläche von der Längsachse des Bolzens entgegen der Auszugsrichtung zu.

Die Quellung kann erfindungsgemäss ein chemischer Vorgang, ein physikalischer Vorgang oder ein Mischvorgang sein. Vorzugsweise kann nach der Erfindung unter einer Quellung jeder Vorgang verstanden werden, bei dem das Hinzufügen einer Aktiviersubstanz, insbesondere einer Flüssigkeit, zu einer Volumenvergrößerung des, insbesondere als Festkörper ausgeführten, Quellelements führt.

Bei dem Expansionselement kann es sich beispielsweise um einen Keil handeln. Besonders bevorzugt ist es allerdings, dass das Expansionselement eine Spreizhülse ist, die den Bolzen zumindest bereichsweise umgibt, und/oder dass der Bolzen einen Spreizkonus aufweist, wobei die Schrägfläche durch den Spreizkonus gebildet wird. Hierdurch wird eine besonders gleichmässige Krafteinleitung in Umfangsrichtung erzielt. Der Spreizkonus ist erfindungsgemäss zum Aufspreizen der Spreizhülse, das heisst zum radialen Aufweiten der Spreizhülse vorgesehen. Es können ein Expansionselement oder auch mehrere Expansionselemente vorgesehen sein.

Nach der Erfindung kann der Bolzen eine Lastaufnahmeeinrichtung aufweisen, die insbesondere als Aussengewinde oder als Innengewinde ausgebildet sein kann. Die Lastaufnahmeeinrichtung dient zur Einleitung von Zugkräften, die in Auszugsrichtung gerichtet sind, in den Anker. Zweckmässigerweise ist die Schrägfläche in einem ersten Endbereich des Bolzens und die Lastaufnahmeeinrichtung in einem gegenüberliegenden zweiten Endbereich des Bolzens angeordnet. Insbesondere kann der Richtungsvektor der Auszugsrichtung von der Schrägfläche zur Lastaufnahmeeinrichtung gerichtet sein. An der Schrägfläche nimmt der Abstand der Oberfläche des Bolzens zu seiner Längsachse mit zunehmendem Abstand von der Lastaufnahmeeinrichtung zu.

Insbesondere kann die Erfindung bei sogenannten Bolzenankern zum Einsatz kommen, bei denen die Spreizhülse nicht aus dem Bohrloch reicht. Denn bei solchen Bolzenankern wird der Spreizvorgang besonders stark von der Reibung zwischen Expansionselement und Bohrlochwand beeinflusst. Demgemäss kann am Bolzen ein Anschlag ausgebildet sein, der eine Verschiebung des Expansionselements von der Schrägfläche hinweg begrenzt. Ein solcher Anschlag kann bei einem Bolzenanker in besonders einfacher Weise gewährleisten, dass das Expansionselement zuverlässig zusammen mit dem Bolzen in das Bohrloch eindringt. Vorzugsweise ist der Anschlag eine Ringschulter, was herstellungstechnisch und im Hinblick auf die Zuverlässigkeit vorteilhaft sein kann. Insbesondere ist der Anschlag axial zwischen der Schrägfläche und der Lastaufnahmeeinrichtung angeordnet.

Grundsätzlich könnte das Quellelement unmittelbar am Expansionselement angeordnet sein. Besonders vorteilhaft ist es jedoch, dass der Spreizanker ein Fixierelement aufweist, wobei das Quellelement am Fixierelement angeordnet ist. Indem das Quellelement an einem eigens hierfür vorgesehenen, vorzugsweise von der Spreizhülse getrennten, Fixierelement angeordnet ist, können die einzelnen Funktionalitäten des Ankers auf verschiedene Teile verteilt werden. Hierdurch kann der Herstellungsaufwand reduziert und/oder die Zuverlässigkeit noch weiter erhöht werden, insbesondere weil die quellfähige Masse von dem Teil des Ankers beabstandet sein kann, der radial nach aussen gedrängt wird. Zweckmässigerweise ist das Fixierelement axial zwischen dem Expansionselement und dem Anschlag und/oder zwischen dem Expansionselement und der Lastaufnahmeeinrichtung am Bolzen angeordnet. Vorzugsweise kann das Fixierelement am Expansionselement anliegen. Hierdurch ist eine besonders einfache Bauform gegeben. Geeigneterweise ist das Fixierelement axial verschiebbar am Bolzen angeordnet, was den konstruktiven Aufwand noch weiter reduzieren kann. Insbesondere kann der oben genannte Anschlag, der eine Verschiebung des Expansionselements von der Schrägfläche hinweg begrenzt, auch eine Verschiebung des Fixierelements und/oder des Quellelements von der Schrägfläche hinweg begrenzen.

Eine vorteilhafte Ausgestaltung liegt darin, dass das Fixierelement ein Fixierring ist, und/oder dass das Quellelement ringförmig oder ringsegmentförmig ist. Hierdurch kann eine besonders gleichmässige Krafteinleitung erzielt werden. Der Fixierring kann auch unterbrochen sein, was herstellungsmässig vorteilhaft sein kann. Dass Fixierelement kann beispielsweise aus einem Metallmaterial, insbesondere aus Stahl, gefertigt sein.

Weiterhin ist es vorteilhaft, dass der Spreizanker, insbesondere sein Fixierelement, eine Aufnahme aufweist, in der das Quellelement zumindest bereichsweise aufgenommen ist. Hierdurch kann in besonders einfacher Art und Weise verhindert werden, dass das Quellelement beim Einschlagen des Ankers unerwünscht vom Anker abschert. Soweit das Fixierelement ein Fixierring ist, kann die Aufnahme insbesondere eine Ringnut sein, die den Bolzen umläuft.

Vorzugsweise kann vorgesehen sein, dass das Quellelement durch Einschieben des Spreizankers in das Bohrloch aktivierbar ist. Zu diesem Zweck kann beispielsweise die Aktiviersubstanz für das Quellelement in einem geschlossenen Behälter am Spreizanker, insbesondere am Quellelement, angeordnet sein, wobei der Behälter beim Einschieben des Spreizankers in das Bohrloch aufbricht und die Aktiviersubstanz freisetzt. Das Quellelement kann über den Querschnitt des Anschlags hinausragen, so dass das Quellelement beim Einschlagen mechanisch beansprucht wird und damit aktiviert werden kann. Grundsätzliche kann die Aktiviersubstanz für das Quellelement aber auch separat in das Bohrloch zugeführt werden.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine teilweise längsgeschnittene Ansicht eines in einem Betonsubstrat gesetzten Spreizankers gemäss dem Stand der Technik;
- Figur 2:: eine abgewickelte Ansicht der Innenseite des als Spreizhülse ausgebildeten Expansionselements des Ankers aus Figur 1;
- Figur 3:: eine Seitenansicht eines erfindungsgemässen Spreizankers; und
- Figur 4:: eine perspektivische Ansicht des Fixierelements mit dem Quellelement des erfindungsgemässen Spreizankers nach Figur 3.

Gleich wirkende Elemente sind in den Figuren mit denselben Bezugszeichen gekennzeichnet.

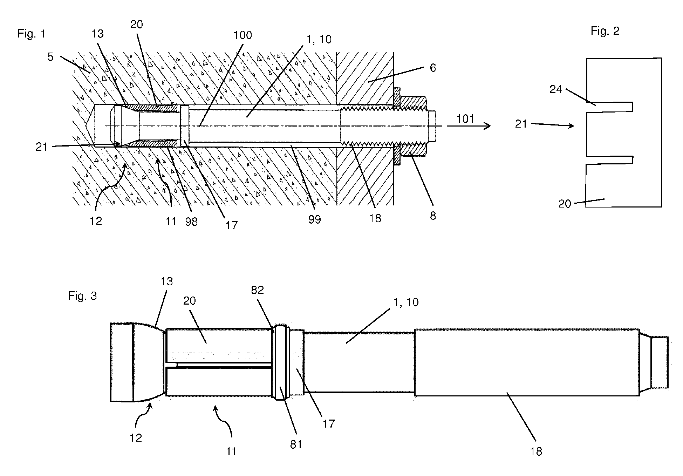

Die Figuren 1 und 2 zeigen ein Ausführungsbeispiel eines Spreizankers 1 gemäss dem Stand der Technik. Wie insbesondere Figur 1 zeigt, weist der Spreizanker 1 einen Bolzen 10 und ein als Spreizhülse ausgebildetes Expansionselement 20 auf, wobei die Spreizhülse den Bolzen 10 umgibt. Der Bolzen 10 weist einen Halsbereich 11 mit konstantem Querschnitt und im Anschluss an den Halsbereich 11 im vorderen Endbereich des Bolzens 10 einen Spreizkonus 12 für die Spreizhülse 20 auf, an welchem die Oberfläche des Bolzens 10 als Schrägfläche 13 ausgebildet ist, und an welchem sich der Bolzen 10 ausgehend vom Halsbereich 11 zu seinem vorderen Ende hin aufweitet. Auf der dem Spreizkonus 12 abgewandten Seite des Halsbereichs 11 weist der Bolzen 10 einen beispielsweise als Ringschulter ausgebildeten Anschlag 17 für die Spreizhülse 20 auf. An seinem dem Spreizkonus 12 entgegengesetzten hinteren Endbereich ist der Bolzen 10 mit einem Aussengewinde 18 für eine Mutter 8 versehen.

Wie insbesondere in Figur 2 erkennbar ist, weist die Spreizhülse 20 Spreizschlitze 24 auf, die von der vorderen Stirnseite 21 der Spreizhülse 20 ausgehen. Diese Spreizschlitze 24 erleichtern das radiale Aufweiten der Spreizhülse 20 durch den Spreizkonus 12 des Bolzens 10.

Beim Setzen des Spreizankers 1 wird der Bolzen 10 mit dem Spreizkonus 12 voran in Richtung der Längsachse 100 des Bolzens 10 in ein Bohrloch 99 im Substrat 5 aus Figur 1 geschoben. Aufgrund des Anschlags 17, der eine Verschiebung des Expansionselements 20 vom Spreizkonus 12 hinweg begrenzt, wird dabei auch das als Spreizhülse ausgebildete Expansionselement 20 in das Bohrloch 99 eingebracht. Sodann wird der Bolzen 10, beispielsweise durch Anziehen der Mutter 8, wieder ein Stück weit in der parallel zur Längsachse 100 verlaufenden Auszugsrichtung 101 aus dem Bohrloch 99 herausgezogen. Aufgrund seiner Reibung an der im wesentlichen zylindrischen Wand 98 des Bohrlochs 99 bleibt das als Spreizhülse ausgebildete Expansionselement 20 dabei im Bohrlochs 99 zurück und es kommt infolgedessen zu einer Verschiebung des Bolzens 10 relativ zum Expansionselement 20. Bei dieser Verschiebung dringt die Schrägfläche 13 des Spreizkonus 12 des Bolzens 10 immer tiefer so in das Expansionselement 20 ein, dass das Expansionselement 20 von der Schrägfläche 13 radial aufgeweitet und mit der Wand 98 des Bohrlochs 99 verpresst wird. Durch diesen Mechanismus wird der Spreizanker 1 im Substrat 5 fixiert. Der gesetzte Zustand des Spreizankers 1, in dem er im Substrat 5 fixiert ist, ist in Figur 1 gezeigt. Mittels der Mutter 8 kann ein Anbauteil 6 am Substrat 5 festgelegt werden.

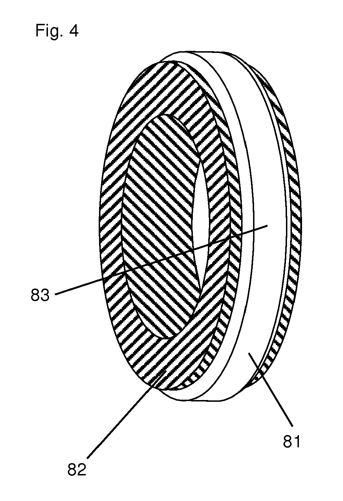

Eine Ausführungsform eines erfindungsgemässen Spreizankers ist in den Figuren 3 und 4 dargestellt. Die erfindungsgemässe Ausführungsform der Figuren 3 und 4 realisiert eine Reihe von Merkmalen der Ausführungsform der Figuren 1 und 2 in analoger Weise, so dass die obenstehende Beschreibung insoweit analog angewandt werden kann, und im Folgenden nur auf die erfindungsgemässen Unterschiede eingegangen wird.

Die erfindungsgemässe Ausführungsform der Figuren 3 und 4 unterscheidet sich von der Ausführungsform des Standes der Technik gemäss Figuren 1 und 2 im wesentlichen dadurch, dass bei der erfindungsgemässen Ausführungsform der Figuren 3 und 4 ein zusätzliches Fixierelement 82 mit einem Quellelement 81 vorgesehen ist, welches eine quellfähige Masse aufweist. Das Fixierelement 82 ist im Halsbereich 11 des Bolzens 10 zwischen dem Expansionselement 20 und dem Anschlag 17 axial verschiebbar am Bolzen 10 angeordnet. Es ist ringförmig als Fixierring ausgebildet, welcher den Bolzen umgibt, und weist eine umlaufende Ringnut 83 auf, in welcher das ebenfalls ringförmige Quellelement 81 teilweise, nämlich mit radialem Überstand nach aussen hin, aufgenommen ist. Das Fixierelement 82 mit dem Quellelement 81 ist geringfügig durchmessergrösser als der Anschlag 17, damit das Quellelement 81 beim Einführen des Spreizankers 1 in ein Bohrloch 99 aktiviert werden kann.

Beim Einführen des Spreizankers 1 in das Bohrloch 99 wird die quellfähige Masse des Quellelements 81 aktiviert und drückt infolgedessen radial gegen die Wand 98 des Bohrlochs 99. Hierdurch wird das Fixierelement 82 mit dem Quellelement 81 axial an der Bohrlochwand 98 festgelegt. Infolgedessen wird auch das Expansionselement 20, welches sich am Fixierelement 82 abstützt, axial im Bohrloch 99 festgelegt, so dass das Expansionselement 20 zuverlässig im Bohrloch 99 festliegt, wenn der Bolzen 10 beim Setzen des Ankers 1 relativ zum Expansionselement 20 in Auszugsrichtung 101 versetzt wird.

## Patentansprüche

1. Spreizanker (1) mit
- einem Bolzen (10) und
- zumindest einem am Bolzen (10) angeordneten Expansionselement (20),
- wobei der Bolzen (10) eine Schrägfläche (13) aufweist, welche das Expansionselement (20) am Bolzen (10) radial nach aussen drängt, wenn der Bolzen (10) in einer Auszugsrichtung (101) relativ zum Expansionselement (20) versetzt wird,
**dadurch gekennzeichnet,**
- **dass** der Spreizanker (1) zumindest ein Quellelement (81) aus einer quellfähigen Masse aufweist, welches aufquellen kann, um das Expansionselement (20) in Auszugsrichtung (101) an der Wand (98) eines Bohrlochs (99) festzulegen.

2. Spreizanker nach (1) Anspruch 1,
**dadurch gekennzeichnet,**
- **dass** das Expansionselement (20) eine Spreizhülse ist, die den Bolzen (10) zumindest bereichsweise umgibt, und
- **dass** der Bolzen (10) einen Spreizkonus (12) aufweist, wobei die Schrägfläche (13) durch den Spreizkonus (12) gebildet wird.

3. Spreizanker (1) nach einem der vorstehenden Ansprüche,
**dadurch gekennzeichnet,**
- **dass** der Bolzen (10) einen Anschlag (17), beispielsweise eine Ringschulter, aufweist, der eine Verschiebung des Expansionselements (20) von der Schrägfläche (13) hinweg begrenzt, und
- **dass** der Spreizanker (1) ein Fixierelement (82) aufweist, das axial zwischen dem Expansionselement (20) und dem Anschlag (17) axial verschiebbar am Bolzen (10) angeordnet ist, wobei das Quellelement (81) am Fixierelement (82) angeordnet ist.

4. Spreizanker (1) nach Anspruch 3,
**dadurch gekennzeichnet,**
**dass** das Fixierelement (82) ein Fixierring ist, und/oder
**dass** das Quellelement (81) ringförmig oder ringsegmentförmig ist.

5. Spreizanker (1) nach einem der vorstehenden Ansprüche,
**dadurch gekennzeichnet,**
**dass** der Spreizanker (1) eine Aufnahme aufweist, in der das Quellelement (81) zumindest bereichsweise aufgenommen ist.

6. Spreizanker (1) nach einem der vorstehenden Ansprüche,
**dadurch gekennzeichnet,**
**dass** das Quellelement (81) durch Einschieben des Spreizankers (1) in das Bohrloch (99) aktivierbar ist.
